# EUROPÄISCHE PATENTSCHRIFT

(11) **EP 2 799 783 B1**
(45) Veröffentlichungstag und Bekanntmachung des Hinweises auf die Patenterteilung: **01.02.2017**
(21) Anmeldenummer: 13196174.0
(22) Anmeldetag: 09.12.2013
(51) Int. Cl.: F24D 3/14, F16L 3/127

(54) **Halter zum Fixieren einer Leitung, insbesondere eines Rohres, sowie entsprechende Verbindungsanordnung**
Holder for fixing a conduit, in particular of a pipe, and corresponding connection assembly
Support pour la fixation d'une conduite, notamment d'un tuyau, et dispositif de liaison correspondant

(30) Priorität: 05.03.2013 DE 102013003631
(43) Veröffentlichungstag der Anmeldung: 05.11.2014
(73) Patentinhaber: Viega GmbH & Co. KG, 57439 Attendorn (DE)
(72) Erfinder: Oischinger, Matthias, 94250 Achslach (DE); Pilmeier, Reinhard, 94354 Haselbach (DE); Czerski, Lukas, 94526 Metten (DE); Eich, Manfred, 94375 Stallwang (DE)
(74) Vertreter: Cohausz & Florack

(56) Entgegenhaltungen:
- DE-A1- 4 005 659
- DE-C1- 19 505 862
- DE-U1- 7 827 229

## Beschreibung

Die Erfindung betrifft eine Anordnung enthaltend einen Halter zum Fixieren einer Leitung an einem Belag und den Belag, wobei der Halter versehen ist mit einem Leitungsträger und mit mindestens einem Verankerungselement, das mit dem Leitungsträger verbunden ist und das einen Schaft, der sich über die Unterseite des Leitungsträgers hinaus in einer Erstreckungsrichtung zu einem unteren Schaftende erstreckt, sowie mindestens zwei Flügel aufweist, die an gegenüberliegenden Seiten des Schaftes mit diesem verbunden sind und die zumindest abschnittsweise winkelig zur Erstreckungsrichtung des Schaftes verlaufen, wobei der Schaft aus einem elastischen Material besteht und eine zwischen den Flügeln verlaufende Schlitzung aufweist, die sich parallel zur Erstreckungsrichtung des Schaftes vom unteren Schaftende in Richtung des Leitungsträgers erstreckt und mindestens zwei nebeneinander verlaufende Teilabschnitte ausbildet. Ferner betrifft die Erfindung eine Verbindungsanordnung, insbesondere für ein Heizungssystem, beispielsweise Fußbodenheizungssystem, mit mindestens einem Halter, mit einer Leitung und mit einem Belag, wobei der Halter in dem Belag verankert ist und die Leitung an dem Belag fixiert. Entsprechende Anordnungen, die den Oberbegriff von Anspruch 1 zeigen, sind beispielsweise aus der DE 78 27 229 U1 bekannt.

Halter der zuvor beschriebenen Art mit insbesondere zwei einander gegenüberliegenden Verankerungselementen, die jeweils zwei Flügel (Widerhaken) aufweisen, finden in einer Vielzahl von Anwendungen Verwendung und dienen beispielsweise zum Fixieren von Rohren (Rohrleitungen), Schläuchen (Schlauchleitungen) oder Kabeln (elektrischen Leitungen) an einem Belag, beispielsweise einem Boden, einer Wand oder einer Decke. Derartige Halter weisen im Allgemeinen einen Leitungsträger in Form eines U-förmigen Bügels auf, dessen Innendurchmesser zum Außendurchmesser der Leitung korrespondiert. Der bügelförmige Leitungsträger weist ferner an seiner Unterseite zwei Schäfte auf, an deren jeweiligem Ende ein Verankerungselement, auch Nadelspitze genannt, mit beispielsweise zwei Widerhaken bzw. Flügeln angeordnet ist.

Zur Fixierung der Leitung, beispielsweise des Rohrs, des Schlauches oder des Kabels, an dem Belag, beispielsweise dem Bodenbelag, dem Wandbelag oder dem Deckenbelag, werden die Verankerungselemente (Nadelspitzen) in den entsprechenden Belag gestochen bzw. gesetzt. Durch die Flügel wird bei einer anschließenden Zugbelastung entgegen der Einsetzrichtung des Halters ein Lösen des jeweiligen Halters zumindest erschwert. Zur Vereinfachung der Anbringung des jeweiligen Halters können von einem Monteur Setzgeräte verwendet werden.

Ein stetiges Anliegen ist es, Halter bzw. Verankerungselemente derart weiterzuentwickeln, dass eine verbesserte und sichere Fixierung einer Leitung an dem Belag möglich ist und ein unerwünschtes Lösen der Halter und somit der Leitung vermieden, zumindest jedoch erschwert wird. Insbesondere für den Fall, dass die zu fixierende Leitung an einem relativ weichen Material, wie beispielsweise einer wärmeisolierenden (Dämm-)Platte oder/mit Folie, Polystyrolschaumstoffplatte oder dergleichen, angebracht werden soll, ist ein sicherer Halt bei einer Belastung der Leitung oder des Halters problematisch, da die weichen Materialien des Belages kaum Widerstand geben und der Halter bzw. das Verankerungselement leicht herausgerissen werden kann.

Um diesem Problem zu begegnen ist es aus dem Stand der Technik bekannt, Verankerungselemente eines entsprechenden Halters so auszubilden, dass die Flügel, das heißt Widerhaken, beim Einstechen bzw. Einsetzen in den Belag möglichst stark nachgeben und sich möglichst nah an den Schaft anlegen, um dadurch den Querschnitt des im Belag beim Einstechen bzw. Einsetzen entstehenden Loches auf ein Minimum zu reduzieren. Da die Flügel der Verankerungselemente, nachdem diese vollständig durch den Belag hindurchgeführt sind, in ihre Ausgangslage zurückfedern, die sie vor dem Einstechen bzw. Einsetzen im unbelasteten Zustand inne hatten, wird durch die zuvor erwähnte Minimierung des Lochquerschnitts eine maximale Anlagefläche der Flügel an der Unterseite des Belags erreicht. Im Folgenden werden nun einige Beispiele von Haltern und Verankerungselementen beschrieben, die zu den vorangehenden Zwecken entwickelt worden sind.

Aus der DE 103 31 992 A1 ist ein Halter zum Fixieren einer Leitung an einem Belag bekannt, der ebenfalls einen Leitungsträger in U-Form und daran unterseitig angeformte Verankerungselemente aufweist, die jeweils einen Schaft und je Schaft zwei Flügel aufweisen, die an gegenüberliegenden Seiten des Schaftes mit diesem verbunden sind und die im unbelasteten Zustand des Verankerungselements winkelig zur Erstreckungsrichtung des Schaftes verlaufen. Damit beim Einstechen bzw. Einsetzen des Verankerungselements in den Belag ein möglichst kleines Loch entsteht, ist einer der beiden Flügel jedes Verankerungselementes dünner als der jeweils andere Flügel ausgebildet und gelenkig mit dem Schaft verbunden. Gelenkig bedeutet in diesem Zusammenhang, dass sich der Flügel selbst nicht, zumindest nicht nennenswert, verformt, sondern im Verbindungsbereich, in welchem er mit dem Schaft verbunden ist, um eine Schwenkachse schwenkbar ist. Dazu weist das schaftseitige Ende des gelenkigen Flügels eine erhebliche Querschnittsreduzierung auf, die einen Gelenkknickpunkt bildet. Dieser Gelenkknickpunkt gewährleistet einen Schwenkwinkel von nahezu 180°.

Auch aus der EP 2 400 197 A1 ist ein gattungsgemäßer Halter bekannt, wobei hier die Flügel des jeweiligen Verankerungselements an ihrer vom Schaft wegweisenden Seite quer zur Längsrichtung des Flügels geschlitzt sind. Auf diese Weise wird ermöglicht, dass beim Einstechen bzw. Einsetzen ein Abschnitt der Flügel zum Schaft klappen kann, wodurch der Einsetzquerschnitt und damit die Einsetzöffnung in dem Belag verkleinert werden kann.

Die beiden vorangehenden Halter bzw. Verankerungselemente haben den Nachteil, dass durch die erhebliche Reduzierung des Flügelquerschnitts der Flügel bei einer Zugbelastung in diesem Bereich abreißen oder leicht wegklappen kann, wodurch die Haltefunktion verschlechtert oder sogar gänzlich aufgehoben wird.

Die DE 10 2009 009 400 A1 geht einen anderen Weg. Hier weisen beide Flügel an ihrer dem Schaft zugewandten Seite jeweils eine in Längsrichtung des Flügels verlaufende Nut auf, die dazu dient, die Wandstärke in diesem Bereich zu reduzieren, um dadurch eine Sollbiegestelle (keinen Gelenkknickpunkt) innerhalb des Flügels zu bilden. Auf diese Weise wird beim Einstechen bzw. Einsetzen des Verankerungselements in den Belag der äußere Teil der Flügel in Richtung des Schaftes umgebogen, wodurch der Einsetzquerschnitt reduziert wird. Da die Nut in Längsrichtung des Flügels verläuft, sind zwangsläufig zu beiden Seiten der Nut in Längsrichtung des Flügels verlaufende Stege vorgesehen, die bei einer Zugbelastung entgegen der Einsetzrichtung ein Umknicken der äußeren Flügelabschnitte nach außen (vom Schaft weg) verhindern. Dieser Halter ist allerdings durch die besondere Form der Flügel relativ komplex aufgebaut.

Ferner sind aus einem internen Stand der Technik Halter zum Fixieren einer Leitung bekannt, die als Leitungsträger einen Grundträger und an der Oberseite des Grundträgers angeordnete Halteelemente für die Leitung aufweisen, wobei die Halteelemente eine Verrastung der Leitung in dem Leitungsträger zulassen. Der Leitungsträger ist an seiner Unterseite, die insbesondere plattenförmig ausgebildet ist, mit einem Klebemittel versehen, mit dessen Hilfe der Halter auf den Belag, an welchem die Leitung zu fixieren ist, geklebt werden kann. Problematisch ist allerdings, dass sich der Halter bei Belastung, wenn beispielsweise eine Person über den Belag läuft, lösen kann. Auch bei stärkeren Biegungen der Leitung, beispielsweise bei 180°-Umkehrungen, können die relativ hohen Rückstellkräfte innerhalb der Leitung dazu führen, dass der Halter sich verdreht oder vom Belag löst. Relativ hohe Temperaturen, beispielsweise durch Sonneneinstrahlung, können die Klebeverbindung zusätzlich schwächen. Ist der Belag, beispielsweise die Dämmplatte, zusätzlich mit einer Folie überzogen, auf die die Halter aufgeklebt sind, so kann sich auch unbeabsichtigt die Folie von der übrigen Platte lösen, wenn auf die Halter die zuvor beschriebenen Belastungen einwirken.

Bei dem eingangs genannten Stand der Technik, der in der DE 78 27 229 U1 beschrieben ist, weist das Verankerungselement zwei Widerhaken an gegenüberliegenden Seiten des Schaftes auf, wobei sich parallel zur Erstreckungsrichtung des Schaftes vom unteren Schaftende in Richtung des Leitungsträgers eine Schlitzung bis in den Bereich zwischen den Flügeln erstreckt, wodurch der Schaft zwei nebeneinander verlaufende Teilabschnitte ausbildet. Der Halter dient dazu, in vorgefertigte Öffnungen in einer Aluminiumplatte hineingedrückt zu werden. Dabei werden aufgrund der Schlitzung die Widerhaken beim Eindrücken in die Öffnung in der Aluminiumplatte aufeinander zu bewegt, wodurch sich der Spalt verkleinert. Wollte man den Halter aber in einem Belag verankern, der noch keine vorgefertigten Öffnungen aufweist, sondern bei dem die Öffnungen durch das Eindrücken der Verankerungselemente in den Belag erst erzeugt werden, würden mit den bekannten Haltern relativ große Lochquerschnitte verursacht. Die großen Löcher wiederum können negative Auswirkungen auf den Halt haben.

Es ist daher eine Aufgabe der vorliegenden Erfindung, eine Anordnung enthaltend einen Halter und einen Belag bereitzustellen, die einen möglichst optimalen Halt des Halters am Belag bei möglichst einfachem Aufbau des Halters gewährleistet.

Die zuvor hergeleitete und aufgezeigte Aufgabe wird gemäß einer ersten Lehre der vorliegenden Erfindung bei einer Anordnung enthaltend einen Halter zum Fixieren einer Leitung, beispielsweise eines Rohres, eines Schlauches oder eines Kabels, insbesondere für ein Heizungssystem, vorzugsweise Fußbodenheizungssystem, an einem Belag, insbesondere einer Platte oder Folie, beispielsweise einer wärmeisolierenden Platte oder Folie, und den Belag, wobei der Halter versehen ist mit einem Leitungsträger und mit mindestens einem Verankerungselement, bevorzugt mit mindestens zwei Verankerungselementen, besonders bevorzugt mit mehr als zwei Verankerungselementen, das/die mit dem Leitungsträger verbunden ist/sind und das/die einen Schaft, der sich über die Unterseite des Leitungsträgers hinaus in einer Erstreckungsrichtung (diese ist identisch mit der Einsetzrichtung des Halters bzw. Verankerungselements) zu einem unteren Schaftende erstreckt, sowie mindestens zwei Flügel (Widerhaken) aufweist/aufweisen, die an gegenüberliegenden Seiten des Schaftes mit diesem verbunden sind und die (im unbelasteten Zustand des Verankerungselements) zumindest abschnittsweise winkelig zur Erstreckungsrichtung des Schaftes verlaufen, wobei der Schaft aus einem elastischen Material besteht und eine zwischen den Flügeln verlaufende Schlitzung (Teilung) aufweist, die sich parallel zur Erstreckungsrichtung des Schaftes vom unteren Schaftende in Richtung des Leitungsträgers erstreckt und mindestens zwei nebeneinander verlaufende Teilabschnitte ausbildet, dadurch gelöst, dass die Flügel und die Schlitzung derart ausgebildet sind, dass sich beim Eindrücken des Verankerungselements in Erstreckungsrichtung in den Belag die Flügel in Richtung des Schaftes zusammendrücken und gleichzeitig die Schlitzung in Erstreckungsrichtung zum unteren Schaftende hin erweitert.

Mit der Unterseite des Leitungsträgers ist die im bestimmungsgemäß mit dem Belag verbundenen Zustand der Oberseite des Belags zugewandte Seite gemeint. Die Oberseite des Belags ist die der zu befestigenden Leitung zugewandte Seite.

Mit einem elastischen Material ist ein Material oder Materialmix gemeint, der elastische, das heißt federnde, Eigenschaften hervorruft. Bei einem elastischen bzw. federnden Material des Schaftes führt dies dazu, dass der Schaft bzw. die definierten Teilabschnitte des Schaftes aus ihrer Ausgangslage, die sie im unbelasteten Zustand des Verankerungselements inne haben, ausgelenkt werden können und, nachdem die die Auslenkung hervorrufende Belastung nicht mehr vorliegt, wieder in die Ausgangslage zurückfedern können.

Erfindungsgemäß ist also vorgesehen, dass der Schaft in einem Abschnitt, der sich bis zum unteren Schaftende erstreckt, geteilt, beispielsweise zweigeteilt, ist, so dass der Schaft in diesem Abschnitt aus mindestens zwei Teilabschnitten besteht, wobei an jedem Teilabschnitt jeweils mindestens ein Flügel angeordnet ist. Die Schlitzung bzw. Teilung, beispielsweise Zweiteilung, schließt nicht aus, dass die Teilabschnitte des Schaftes sich im unbelasteten Zustand des Verankerungselementes nicht abschnittsweise oder über ihre gesamte Länge berühren, sondern die Teilabschnitte können sehr wohl auch zumindest abschnittsweise, vorzugsweise über ihre gesamte Länge, aneinander anliegen. Der Begriff Schlitzung meint also, dass in diesem Abschnitt eine Teilung bzw. Trennung des Materials vorliegt, wobei sich aber die beiden getrennten Teilabschnitte durchaus auch berühren können.

Durch die Schlitzung bzw. Teilung des Schaftes zwischen den beiden Flügeln wird erreicht, dass beim Eindrücken des Verankerungselements in den Belag der durch den Belag auf die Flügel ausgeübte Widerstand die Flügel zusammendrückt (in Richtung des Schaftes drückt). Gleichzeitig kann der geschlitzte Abschnitt des Schaftes nachgeben, wodurch sich die Teilabschnitte des Schaftes auseinander bewegen und sich die Spitze (das untere Schaftende) gegenüber dem unbelasteten Zustand öffnet. Die Flügel können dadurch weiter zusammengedrückt werden als in dem Fall eines ungeschlitzten Schaftes. Das Verankerungselement wird dadurch schmaler als bei einem ungeschlitzten Schaft und schiebt sich dadurch leichter durch den Belag. Nachdem die Flügel vollständig durch den Belag hindurchgeführt sind, federn diese wieder in ihre Ausgangsstellung zurück, die sie vorher im unbelasteten Zustand bereits inne hatten. Das Verankerungselement verhakt sich dadurch entgegen der Einsetzrichtung und entgegen der Erstreckungsrichtung des Schaftes an der Unterseite (der von der zu fixierenden Leitung abgewandten Seite) des Belages.

Das Verankerungselement hat auf Zug und Druck eine hohe Festigkeit. Gleichzeitig wird bei Anordnung mehrerer Verankerungselemente - wie gesagt können auch mindestens zwei oder mehr der hier beschriebenen Verankerungselemente am Halter vorgesehen sein - ein Verdrehen des Halters gegenüber dem Belag minimiert. Die Schlitzung, die im Folgenden noch weiter beschrieben wird, führt zu einer hohen Federwirkung. Dadurch wird der Belag beim Eindrücken des Halters nur minimal zerstört und die Flügel können eine maximale Haltekraft übertragen, wenn sie durch den Belag hindurchgeführt sind.

Gemäß einer Ausgestaltung der erfindungsgemäßen Anordnung ist die Schlitzung zumindest abschnittsweise, insbesondere vollständig, von einem Spalt gebildet. Ein Spalt meint im Sinne der vorliegenden Erfindung, dass in diesem Abschnitt die Teilabschnitte des Schaftes voneinander beabstandet sind, einander also nicht berühren. Wird die Schlitzung nur abschnittsweise von einem Spalt gebildet, bedeutet dies, dass ein Abschnitt der Schlitzung als Spalt ausgebildet ist, in dem sich die Teilabschnitte nicht berühren, während in einem anderen Abschnitt der Schlitzung sich die Teilabschnitte berühren können. So ist es beispielsweise denkbar, dass sich die Teilabschnitte zur Ausbildung eines möglichst spitzen unteren Endes des Schaftes im Bereich des unteren Schaftendes berühren, während die einander zugewandten Seiten der Teilabschnitte mit zunehmender Tiefe der Schlitzung leicht auseinanderlaufen und einen Spalt bilden. Es ist aber grundsätzlich auch denkbar, dass die Schlitzung vollständig von einem Spalt gebildet wird, sich die Teilabschnitte also über die gesamte Länge der Schlitzung nicht berühren. Dabei kann insbesondere vorgesehen sein, dass der Spalt am unteren Schaftende beginnt, das heißt die Teilabschnitte berühren sich am unteren Schaftende nicht. Im Bereich des Spaltes, in dem also ein Abstand zwischen den Teilabschnitten des Schaftes besteht, können sich beim Einsetzen des Verankerungselements in den Belag die beiden Teilabschnitte des Schaftes aufeinander zu bewegen, was den Einsetzvorgang zusätzlich vereinfacht und den Einsetzquerschnitt weiter reduziert.

Gemäß einer weiteren Ausgestaltung der erfindungsgemäßen Anordnung verlaufen die einander zugewandten Seiten der nebeneinander verlaufenden Teilabschnitte des Schaftes im unbelasteten Zustand des Verankerungselementes parallel zueinander. Eine solche Spaltform lässt sich auf besonders einfache Weise herstellen, sowohl in einem Verfahren, bei dem der Spalt bereits von Anfang an beim Formvorgang, beispielsweise beim Spritzgießen, vorgesehen wird, als auch bei einem Verfahren, bei dem der Spalt nachträglich durch ein Schneid- oder Fräswerkzeug in den Schaft eingebracht wird.

Gemäß noch einer Ausgestaltung der erfindungsgemäßen Anordnung erstreckt sich die Schlitzung, insbesondere der Spalt, bis zu einem Punkt (das heißt bis zu einer Stelle), der vom unteren Schaftende aus (entgegen der Erstreckungsrichtung) jenseits eines Verbindungsbereichs, in dem mindestens einer der Flügel mit dem jeweiligen Teilabschnitt des Schaftes verbunden ist, liegt. Vorzugsweise liegt der Punkt bzw. die Stelle vom unteren Schaftende aus (entgegen der Erstreckungsrichtung) jenseits aller Verbindungsbereiche, in denen einer der Flügel mit dem jeweiligen Teilabschnitt des Schaftes verbunden ist. Mit anderen Worten liegt der Verbindungsbereich in Erstreckungsrichtung zwischen dem unteren Schaftende und dem Punkt bzw. der Stelle, bis zu dem/der sich die Schlitzung bzw. der Spalt erstreckt. Auf diese Weise lassen sich die Flügel besonders leicht bzw. besonders weit zusammendrücken, wenn das Verankerungselement in den Belag eingesetzt wird.

Gemäß wiederum einer weiteren Ausgestaltung der erfindungsgemäßen Anordnung nimmt der Querschnitt der Teilabschnitte des Schaftes in Erstreckungsrichtung des Schaftes, insbesondere bis zum unteren Schaftende, ab. Insbesondere ist die Abnahme des Querschnitts gleichmäßig. Zusätzlich oder alternativ ist auch denkbar, dass der Querschnitt der Flügel zum Schaft hin abnimmt, insbesondere gleichmäßig. Auf diese Weise lässt sich am Verankerungselement ein besonders spitz zulaufendes unteres Ende schaffen, was den Einsetzvorgang weiter erleichtert.

Gemäß einer weiteren Ausgestaltung der erfindungsgemäßen Anordnung weist der Leitungsträger mindestens ein Halteelement für die Leitung und insbesondere einen Grundträger, an dessen Oberseite das Halteelement für die Leitung angeordnet ist, auf. Mit dem Grundträger ist ein Element gemeint, an welchem oberseitig die Halteelemente und unterseitig das mindestens eine Verankerungselement Halt findet bzw. angeformt ist. Der Grundträger kann beispielsweise plattenförmig ausgebildet sein und/oder mehrere miteinander verbundene Stege aufweisen. Wesentlich ist, dass der Grundträger eine so hohe Steifigkeit aufweist, dass das oder die oberseitig angeordneten Halteelemente eine zu fixierende Leitung stabil halten, insbesondere durch Verrastung. Bei dem Halteelement des Leitungsträgers kann es sich um einen Bügel oder um ein oder mehrere Elemente handeln, die an der zur zu fixierenden Leitung gewandten Seite sichelförmig geformt sind. In letzterem Fall haben die Halteelemente insbesondere eine solche Form, dass im in den Leitungsträger eingesetzten Zustand der Leitung ein Abschnitt einiger oder aller Halteelemente mit der Leitung oberseitig überlappt.

Gemäß noch einer weiteren Ausgestaltung der erfindungsgemäßen Anordnung bestehen die Flügel aus einem elastischen Material, insbesondere aus demselben Material, wie der Schaft und/oder der Leitungsträger. Bevorzugt handelt es sich bei dem elastischen Material um ein Material oder einen Materialmix, das/der Kunststoff enthält. Dabei ist es denkbar, dass sowohl die Flügel als auch der Schaft zumindest teilweise aus Kunststoff bestehen. Grundsätzlich ist es aber auch denkbar, dass die Flügel aus einem anderen Material als der Schaft bestehen und insbesondere nicht elastisch sind. Dies ist auch nicht zwingend nötig, da schon der Schaft durch die Schlitzung nachgibt und dazu führt, dass die Flügel beim Einsetzen des Verankerungselements durch den ausgeübten Widerstand zusammengedrückt werden.

Gemäß wiederum einer weiteren Ausgestaltung der erfindungsgemäßen Anordnung ist das Verankerungselement einstückig, das heißt integral, ausgebildet. Insbesondere ist das Verankerungselement mit dem Leitungsträger einstückig geformt. Das Verankerungselement und/oder der Leitungsträger können dabei durch Spritzgusstechnik hergestellt sein. Insbesondere kann der gesamte Halter ein Spritzgussteil sein.

Gemäß einer weiteren Ausgestaltung der erfindungsgemäßen Anordnung ist mindestens ein bolzenförmiger Vorsprung, zum Beispiel in Form eines Dübels, mit dem Leitungsträger verbunden und erstreckt sich über die Unterseite des Leitungsträgers hinaus parallel zur Erstreckungsrichtung des Schaftes. Dabei kann das untere Ende des Vorsprungs einen größeren Abstand in Erstreckungsrichtung von der Unterseite des Leitungsträgers als das untere Schaftende haben. Ein solcher bolzenförmiger Vorsprung kann außerdem an seinem unteren Ende verjüngt sein und/oder einen kreuzförmigen Querschnitt haben. Auf diese Weise wird ein Führungselement geschaffen, welches gleichzeitig auch eine Verdrehsicherung gegen unbeabsichtigtes Verdrehen beim Einsetzen oder bei großen auf den Halter einwirkenden Momenten darstellt.

Sowohl der mindestens eine bolzenförmige Vorsprung als auch der jeweilige Schaft des mindestens einen Verankerungselements kann an der Unterseite des Leitungsträgers oder Grundträgers und/oder an der Seite des Leitungsträgers mit diesem verbunden sein.

Eine Weiterbildung der Erfindung umfasst eine Verbindungsanordnung, insbesondere für ein Heizungssystem, beispielsweise Fußbodenheizungssystem, mit mindestens einem Halter, mit einer Leitung, insbesondere einem Rohr, einem Schlauch oder einem Kabel, und mit einem Belag, insbesondere einer Platte oder Folie, beispielsweise einer wärmeisolierenden Platte oder Folie, wobei der Halter in dem Belag verankert ist und die Leitung an dem Belag fixiert, wobei der Halter und der Belag eine Anordnung bilden, die wie zuvor definiert ausgebildet ist.

Dabei ist es denkbar, dass der Leitungsträger zumindest abschnittsweise an der Oberseite des Belags, also der der Leitung zugewandten Seite des Belags, und das Verankerungselement zumindest abschnittsweise an der Unterseite des Belags, also der von der Oberseite des Belags abgewandten Seite des Belags hervorsteht.

Es gibt nun eine Vielzahl von Möglichkeiten, die erfindungsgemäße Anordnung mit dem Halter und dem Belag und die Verbindungsanordnung mit dem Halter, dem Belag und der Leitung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine perspektivische Ansicht eines Verankerungselements für einen Halter einer erfindungsgemäßen Anordnung,
- Fig. 2: eine Vorderansicht des Verankerungselements aus Fig. 1,
- Fig. 3: eine Seitenansicht des Verankerungselements aus Fig. 1,
- Fig. 4: das Verankerungselement aus Fig. 1 vor dem Einsetzen in einen Belag,
- Fig. 5: das Verankerungselement aus Fig. 1 während des Einsetzens in einen Belag,
- Fig. 6: das Verankerungselement aus Fig. 1 nach dem Einsetzen in einen Belag,
- Fig. 7: einen Halter mit einem Verankerungselement gemäß Fig. 1 und
- Fig. 8: eine Verbindungsanordnung mit mehreren Haltern gemäß Fig. 7.

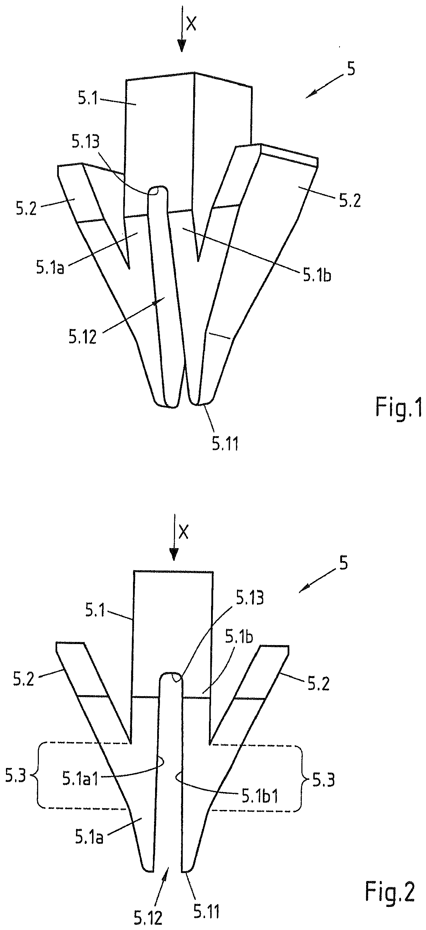

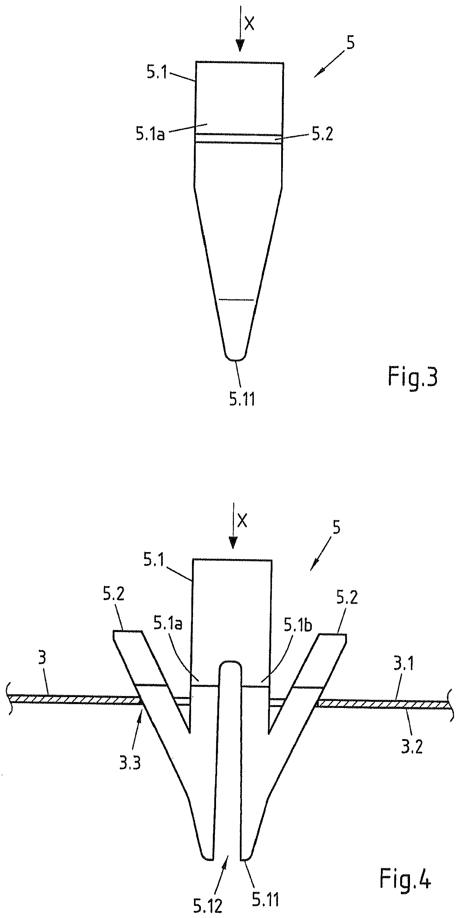

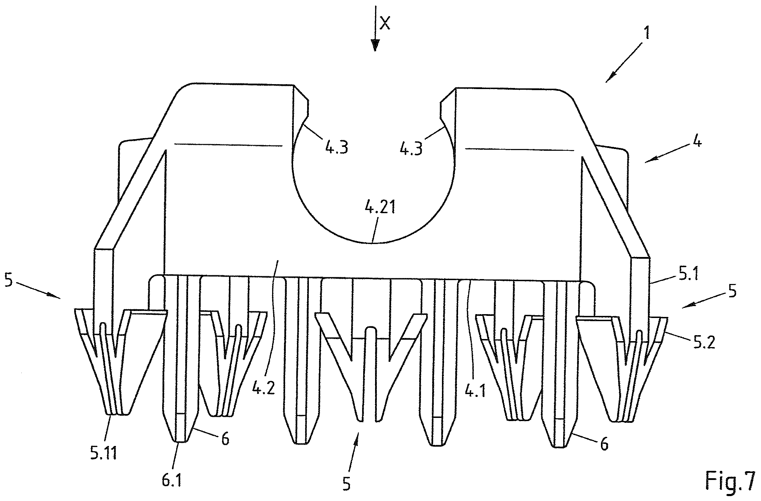

Das in Fig. 1 perspektivisch, in Fig. 2 von vorne und in Fig. 3 von der Seite gezeigte Verankerungselement 5 kann beispielsweise Teil eines Halters 1 zum Fixieren einer Leitung 2 an einem Belag 3 sein, wie er beispielhaft in Fig. 7 dargestellt ist. Grundsätzlich könnte das Verankerungselement 5 aber auch über einen bügelförmigen Abschnitt, der als Leitungsträger dient, mit einem vergleichbaren Verankerungselement 5 verbunden sein, wobei sich ein entsprechender Halter dann als Tackernadel definieren ließe und insbesondere mit einem Setzgerät in einen Belag geschossen werden könnte.

Im Folgenden wird zunächst das Verankerungselement 5 im Detail beschrieben. Das Verankerungselement 5 weist einen Schaft 5.1 auf, der sich über die Unterseite eines Leitungsträgers 4, wie er in Fig. 7 als Teil des Halters 1 gezeigt ist, hinaus in einer Erstreckungsrichtung X zu einem unteren Schaftende 5.11 erstreckt. Ferner weist der Schaft 5.1 zwei Flügel oder Widerhaken 5.2 auf, die an gegenüberliegenden Seiten des Schaftes 5.1 mit diesem verbunden sind und die im unbelasteten Zustand des Verankerungselements 5 winkelig zur Erstreckungsrichtung des Schaftes verlaufen. Bei dem in Fig. 2 gezeigten unbelasteten Zustand verlaufen die Flügel 5.2 etwa in einem Winkel zum Schaft 5.1, der in einem Bereich zwischen 25 und 45°, bevorzugt in einem Bereich zwischen 30 und 40°, liegt. Die vom Schaft 5.1 wegweisenden Enden des jeweiligen Flügels 5.2 weisen dabei auch in eine Richtung weg vom unteren Schaftende 5.11.

Wie in den Figuren 1 und 2 deutlich zu erkennen ist, weist der Schaft 5.1, der aus einem elastischen Material, beispielsweise aus Kunststoff, besteht, eine zwischen den Flügeln 5.2 verlaufende Schlitzung 5.12 in Form eines Spaltes 5.12 auf, die sich parallel zur Erstreckungsrichtung X des Schaftes 5.1 vom unteren Schaftende 5.11 in Richtung des (hier nicht dargestellten) Leitungsträgers 4 erstreckt und mindestens zwei nebeneinander verlaufende Teilabschnitte 5.1a und 5.1b ausbildet. Im vorliegenden Ausführungsbeispiel ist der Schaft 5.1 durch den Spalt 5.12 zweigeteilt, wobei an jedem Teilabschnitt 5.1a und 5.1b jeweils genau ein Flügel 5.2 angeordnet ist. Im Bereich des Spaltes 5.12 sind die einander zugewandten Seiten 5.1a1 und 5.1b1 der Teilabschnitte 5.1a und 5.1b über die gesamte Länge des Spaltes voneinander beabstandet.

Wie Fig. 2 zeigt, verlaufen die einander zugewandten Seiten 5.1a1 und 5.1b1 der nebeneinander verlaufenden Teilabschnitte 5.1a und 5.1b des Schaftes 5.1 im unbelasteten Zustand des Verankerungselementes 5 nahezu parallel zueinander. Auch ist in Fig. 2 zu erkennen, dass sich der Spalt 5.12 bis zu einem Punkt 5.13 erstreckt, der vom unteren Schaftende 5.11 aus entgegen der Erstreckungsrichtung X jenseits eines Verbindungsbereichs 5.3 liegt, in welchem der jeweilige Flügel 5.2 mit dem jeweiligen Teilabschnitt 5.1a und 5.1b verbunden ist. In diesem Fall liegt der Punkt 5.13 deutlich oberhalb beider Verbindungsbereiche 5.3, das heißt sowohl oberhalb des Verbindungsbereichs 5.3 des linken Flügels 5.2 als auch oberhalb des Verbindungsbereichs 5.3 des rechten Flügels 5.2. Mit anderen Worten liegen die vom Schaft 5.1 wegweisenden Enden des jeweiligen Flügels 5.2 bezogen auf die Erstreckungsrichtung X auf einer Höhe, die weiter von dem unteren Schaftende 5.11 beabstandet ist als der Punkt 5.13, bis zu dem sich die Schlitzung 5.12, das heißt der Spalt 5.12, erstreckt.

Wie in Fig. 1 zu erkennen ist und Fig. 3 besonders gut veranschaulicht, nimmt der Querschnitt der Teilabschnitte 5.1a und 5.1b des Schaftes 5.1 in Erstreckungsrichtung X des Schaftes 5.1 bis zum unteren Schaftende 5.11 ab. Entsprechendes gilt auch für die beiden Flügel 5.2, deren Querschnitt ebenfalls zum Schaft 5.1 hin abnimmt. Dadurch wird, wie die Figuren 1 und 3 zeigen, ein relativ spitz zulaufendes unteres Ende des Verankerungselements 5 geschaffen.

In den Figuren 4 bis 6 ist der Vorgang des Einsetzens bzw. Einstechens des Verankerungselements 5 in einen Belag 3, beispielsweise eine Platte oder Folie, dargestellt.

In Fig. 4 ist das Verankerungselement 5 soweit in eine Öffnung 3.3 in den Belag eingeführt, dass das Verankerungselement 5 noch in einem unbelasteten und damit nicht-verformten Zustand ist. Die Öffnung 3.3 entsteht erst durch den Eindrückvorgang, wobei die Größe der Öffnung 3.3 abhängig ist von der Kraft, die die Flügel 5.2 auf den Belag 3 ausüben.

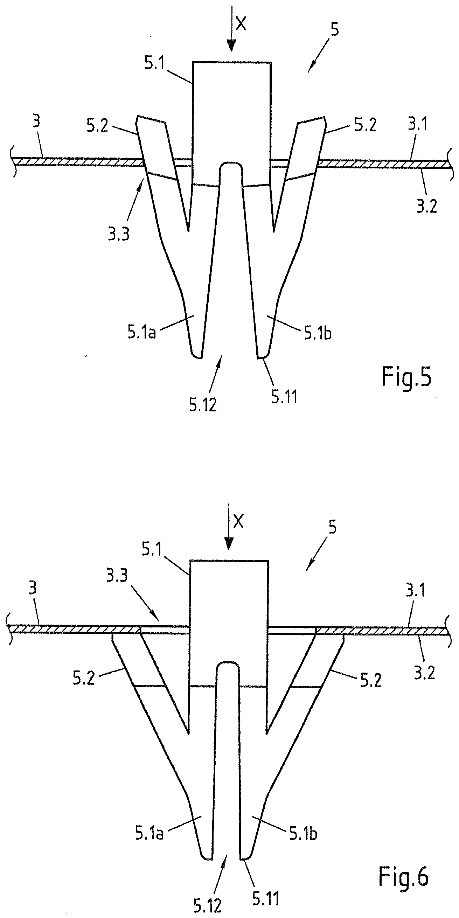

Wird nun, wie Fig. 5 zeigt, das Verankerungselement in Erstreckungsrichtung X des Schaftes 5.1 bzw. in Einsetzrichtung in die Öffnung 3.3 gedrückt, drückt der von dem Belag 3 auf die Flügel 5.2 wirkende Widerstand die Flügel 5.2 in Richtung des Schaftes 5.1 zusammen, wobei sich gleichzeitig der Spalt 5.12 in Erstreckungsrichtung X zum unteren Schaftende 5.11 hin erweitert. Mit anderen Worten werden beim Eindrücken die beiden Teilabschnitte 5.1a und 5.1b auseinander bewegt. Das Verankerungselement 5 erhält dadurch einen relativ geringen Einsetzquerschnitt und verursacht entsprechend geringe Lochquerschnitte im Belag 3.

Fig. 6 zeigt das Verankerungselement 5, nachdem die Flügel 5.2 vollständig durch die Öffnung 3.3 hindurchgeführt sind. In diesem Zustand sind die Flügel 5.2 und entsprechend auch die Teilabschnitte 5.1a und 5.1b jeweils in ihre Ausgangslage, die sie in Fig. 4 inne hatten und die den unbelasteten Zustand darstellt, zurückgefedert. Die oberen Enden der Flügel 5.2 liegen in diesem Zustand an der Unterseite 3.2 des Belags 3 an und halten das Verankerungselement 5 mit einer maximalen Haltekraft entgegen der Richtung X.

Fig. 7 zeigt nun einen vollständigen Halter 1 zum Fixieren einer Leitung 2, beispielsweise eines Rohrs, an einem Belag 3, beispielsweise einer wärmeisolierenden Platte oder Folie. Der Halter 1 weist neben dem bereits beschriebenen Verankerungselement 5 einen Leitungsträger 4 in Form eines Grundträgers 4.2 und an seiner Oberseite 4.21 angeordneter Halteelemente 4.3 für die Leitung 2 auf, wobei der Leitungsträger 4 fest mit dem Verankerungselement 5 verbunden ist. Im eingesetzten Zustand des Halters 1 liegt der Leitungsträger 4 bzw. der Grundträger 4.2 auf der Oberseite 3.1 eines Belages 3 auf, wie er in den Figuren 4 bis 6 gezeigt ist.

Das Verankerungselement 5 ist selbst einstückig ausgebildet und außerdem einstückig mit dem Leitungsträger 4 geformt. Leitungsträger 4 und Verankerungselement 5 bilden zusammen ein Spritzgussteil aus Kunststoff, welches den Halter 1 bildet. Dabei sind, wie Fig. 7 zeigt, mehrere Verankerungselemente 5 vorgesehen, von denen einige an der Seite des Leitungsträgers 4 und andere an der Unterseite 4.1 des Leitungsträgers 4 angeformt sind.

Wie Fig. 7 ferner zeigt, weist der Halter 1 außerdem mehrere an der Unterseite 4.1 des Leitungsträgers 4 angeordnete bolzenförmige Vorsprünge 6 auf, die sich nach unten hin verjüngen und insgesamt einen kreuzförmigen Querschnitt haben. Die bolzenförmigen Vorsprünge sind dübelförmig ausgebildet und erstrecken sich über die Unterseite 4.1 des Leitungsträgers 4 hinaus parallel zur Erstreckungsrichtung X des jeweiligen Schaftes 5.1 der Verankerungselemente 5. Auch die einzelnen Flügel 5.2 und ein Teil des jeweiligen Schaftes 5.1 der Verankerungselemente 5 erstrecken sich, wie Fig. 7 zeigt, über die Unterseite 4.1 des Leitungsträgers 4 hinaus parallel zur Erstreckungsrichtung X. Dabei ist erkennbar, dass die bolzenförmigen Vorsprünge 6 länger als die Verankerungselemente 5 sind, das untere Ende 6.1 der Vorsprünge 6 also einen größeren Abstand in Erstreckungsrichtung von der Unterseite 4.1 des Leitungsträgers 4 als das jeweilige untere Schaftende 5.11 hat.

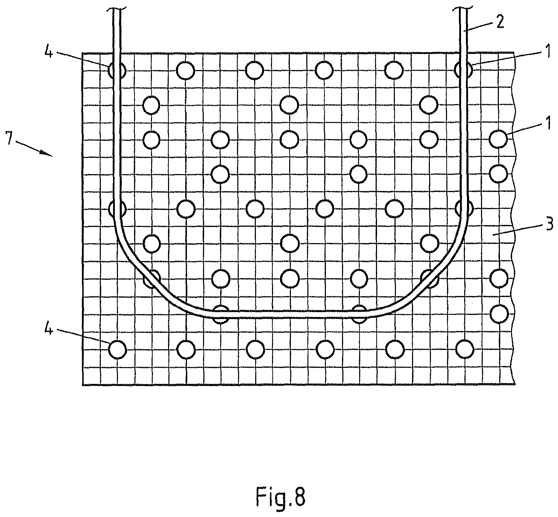

Fig. 8 zeigt schließlich eine Verbindungsanordnung 7, hier beispielhaft für ein Fußbodenheizungssystem, mit einer Vielzahl von Haltern 1, wie sie zuvor beschrieben wurden, mit einer Leitung 2, die von einigen der Halter 1 fixiert wird, und mit einem Belag 3 in Form einer Dämmplatte oder -folie. Bei der Verbindungsanordnung 7 sind sämtliche Halter 1 in dem Belag 3 auf die anhand der Figuren 4 bis 6 beschriebene Weise verankert, wobei einige der Halter 1 die Leitung 2 an dem Belag fixieren. Dabei ist in Fig. 8 erkennbar, dass der Leitungsträger 4 eines jeden Halters 1 oberseitig des Belags 3 angeordnet ist und an dessen Oberseite 3.1 anliegt. Die Verankerungselemente 5 sind in Fig. 8 dagegen nicht erkennbar, da sie unterhalb des Belags 3 angeordnet sind.

## Patentansprüche

1. Anordnung enthaltend einen Halter (1) zum Fixieren einer Leitung (2) an einem Belag (3) und den Belag (3),
wobei der Halter (1) versehen ist
- mit einem Leitungsträger (4) und
- mit mindestens einem Verankerungselement (5), das mit dem Leitungsträger (4) verbunden ist und das einen Schaft (5.1), der sich über die Unterseite (4.1) des Leitungsträgers (4) hinaus in einer Erstreckungsrichtung (X) zu einem unteren Schaftende (5.11) erstreckt, sowie mindestens zwei Flügel (5.2) aufweist, die an gegenüberliegenden Seiten des Schaftes (5.1) mit diesem verbunden sind und die zumindest abschnittsweise winkelig zur Erstreckungsrichtung (X) des Schaftes (5.1) verlaufen,
wobei der Schaft (5.1) aus einem elastischen Material besteht und eine zwischen den Flügeln (5.2) verlaufende Schlitzung (5.12) aufweist, die sich parallel zur Erstreckungsrichtung (X) des Schaftes (5.1) vom unteren Schaftende (5.11) in Richtung des Leitungsträgers (4) erstreckt und mindestens zwei nebeneinander verlaufende Teilabschnitte (5.1a, 5.1b) ausbildet, **dadurch gekennzeichnet, dass** die Flügel (5.2) und die Schlitzung (5.12) derart ausgebildet sind, dass sich beim Eindrücken des Verankerungselements (5) in Erstreckungsrichtung (X) in den Belag (3) die Flügel (5.2) in Richtung des Schaftes (5.1) zusammendrücken und gleichzeitig die Schlitzung (5.12) in Erstreckungsrichtung (X) zum unteren Schaftende (5.11) hin erweitert.

2. Anordnung nach Anspruch 1, **dadurch gekennzeichnet, dass** die Schlitzung (5.12) zumindest abschnittsweise, insbesondere vollständig, von einem Spalt (5.12) gebildet ist.

3. Anordnung nach Anspruch 2, **dadurch gekennzeichnet, dass** der Spalt (5.12) am unteren Schaftende (5.11) beginnt.

4. Anordnung nach einem der vorangehenden Ansprüche, **dadurch gekennzeichnet, dass** die einander zugewandten Seiten (5.1a1,5.1b1) der nebeneinander verlaufenden Teilabschnitte (5.1a,5.1b) des Schaftes (5.1) im unbelasteten Zustand des Verankerungselementes (5) parallel zueinander verlaufen.

5. Anordnung nach einem der vorangehenden Ansprüche, **dadurch gekennzeichnet, dass** sich die Schlitzung (5.12), insbesondere der Spalt (5.12), bis zu einem Punkt (5.13) erstreckt, der vom unteren Schaftende (5.11) aus jenseits eines Verbindungsbereichs (5.3), in dem mindestens einer der Flügel (5.2) mit dem jeweiligen Teilabschnitt (5.1a,5.1b) des Schaftes (5.1) verbunden ist, liegt.

6. Anordnung nach einem der vorangehenden Ansprüche, **dadurch gekennzeichnet, dass** der Querschnitt der Teilabschnitte (5.1a,5.1b) des Schaftes (5.1) in Erstreckungsrichtung (X) des Schaftes (5.1), insbesondere bis zum unteren Schaftende (5.11), abnimmt.

7. Anordnung nach einem der vorangehende Ansprüche, **dadurch gekennzeichnet, dass** der Querschnitt der Flügel (5.2) zum Schaft (5-1) hin abnimmt.

8. Anordnung nach einem der vorangehenden Ansprüche, **dadurch gekennzeichnet, dass** der Leitungsträger (4) mindestens ein Halteelement (4.3) für die Leitung (2) und insbesondere einen Grundträger (4.2), an dessen Oberseite (4.21) das Halteelement (4.3) für die Leitung (2) angeordnet ist, aufweist.

9. Anordnung nach einem der vorangehenden Ansprüche, **dadurch gekennzeichnet, dass** die Flügel (5.2) aus einem elastischen Material bestehen.

10. Anordnung nach einem der vorangehenden Ansprüche, **dadurch gekennzeichnet, dass** das Verankerungselement (5) einstückig ausgebildet ist, insbesondere einstückig mit dem Leitungsträger (4) geformt ist.

11. Anordnung nach einem der vorangehenden Ansprüche, **dadurch gekennzeichnet, dass** mindestens ein bolzenförmiger Vorsprung (6) mit dem Leitungsträger (4) verbunden ist und sich über die Unterseite (4.1) des Leitungsträgers (4) hinaus parallel zur Erstreckungsrichtung (X) des Schaftes (5.1) erstreckt.

12. Verbindungsanordnung (7)
- mit einer Anordnung nach einem der vorangegangenen Ansprüche,
- mit einer Leitung (2) und
wobei der Halter (1) in dem Belag (3) verankert ist und die Leitung (2) an dem Belag (3) fixiert.

13. Verbindungsanordnung (7) nach Anspruch 12, **dadurch gekennzeichnet, dass** der Leitungsträger (4) zumindest abschnittsweise an der Oberseite (3.1) des Belags (3) und das Verankerungselement (5) zumindest abschnittsweise an der Unterseite (3.2) des Belags (3) hervorsteht.

## Claims

1. An assembly containing a holder (1) for fixing a conduit (2) to a covering (3) and the covering (3), wherein the holder (1) is provided
- with a conduit bracket (4) and
- with at least one anchoring element (5) which is connected to the conduit bracket (4) and comprises a shaft (5.1) which extends beyond the underside (4.1) of the conduit bracket (4) in an extension direction (X) to a lower shaft end (5.11), and at least two wings (5.2) which are connected thereto at opposite sides of the shaft (5.1) and which run at least sectionally at angles to the extension direction (X) of the shaft (5.1),
wherein the shaft (5.1) is made of an elastic material and has a slit (5.12) running between the wings (5.2) which extends parallel to the extension direction (X) of the shaft (5.1) from the lower end of the shaft (5.11) in the direction of the conduit bracket (4) and forms at least two partial sections (5.1a, 5.1b) running alongside one another, **characterized in that** the wings (5.2) and the slit (5.12) are configured in such a manner that when the anchoring element (5) is pressed in in the extension direction (X) into the covering (3), the wings (5.2) press together in the direction of the shaft (5.1) and at the same time the slit (5.12) extends in the extension direction (X) to the lower end of the shaft (5.11).

2. The assembly according to claim 1, **characterized in that** the slit (5.12) is formed at least sectionally, particularly completely, by a gap (5.12).

3. The assembly according to claim 2, **characterized in that** the gap (5.12) begins at the lower end of the shaft (5.11).

4. The assembly according to one of the preceding claims, **characterized in that** the sides facing one another (5.1a1, 5.1b1) of the partial sections (5.1a, 5.1b) of the shaft (5.1) running alongside one another run parallel to one another when the anchoring element (5) is in the unloaded state.

5. The assembly according to one of the preceding claims, **characterized in that** the slit (5.12), particularly the gap (5.12), extends up to a point (5.13) which from the lower end of the shaft (5.11) lies on the other side of a connection region (5.3), in which at least one of the wings (5.2) is connected to the respective partial section (5.1a, 5.1b) of the shaft (5.1).

6. The assembly according to one of the preceding claims, **characterized in that** the cross section of the partial sections (5.1a, 5.1b) of the shaft (5.1) diminishes in the extension direction (X) of the shaft (5.1), particularly as far as the lower end of the shaft (5.11).

7. The assembly according to one of the preceding claims, **characterized in that** the cross section of the wings (5.2) diminishes towards the shaft (5.1).

8. The assembly according to one of the preceding claims, **characterized in that** the conduit bracket (4) has at least one holding element (4.3) for the conduit (2) and, in particular, one base bracket (4.2), on the upper side (4.21) whereof the holding element (4.3) for the conduit (2) is arranged.

9. The assembly according to one of the preceding claims, **characterized in that** the wings (5.2) are made of an elastic material.

10. The assembly according to one of the preceding claims, **characterized in that** the anchoring element (5) is configured integrally, is particularly formed integrally with the conduit bracket (4).

11. The assembly according to one of the preceding claims, **characterized in that** at least one bolt-shaped projection (6) is connected to the conduit bracket (4) and extends over the underside (4.1) of the conduit bracket (4) parallel to the extension direction (X) of the shaft (5.1).

12. A connection assembly (7)
- with an assembly according to one of the preceding claims,
- with a conduit (2) and
wherein the holder (1) is anchored in the covering (3) and fixes the conduit (2) to the covering (3).

13. The connection assembly (7) according to claim 12, **characterized in that** the conduit bracket (4) projects at least sectionally on the upper side (3.1) of the covering (3) and the anchoring element (5) projects at least sectionally on the underside (3.2) of the covering (3).

## Revendications

1. Dispositif contenant un support (1) pour la fixation d'une conduite (2) sur un revêtement (3) et le revêtement (3), dans lequel le support (1) est doté
- d'un support de conduite (4) et
- d'au moins un élément d'ancrage (5) qui est relié au support de conduite (4) et qui présente une tige (5.1) s'étendant par-delà la face inférieure (4.1) du support de conduite (4) dans une direction d'extension (X) vers une extrémité de tige inférieure (5.11), ainsi qu'au moins deux ailes (5.2), lesquelles sont reliées à la tige (5.1) sur des côtés situés en vis-à-vis de celle-ci et qui s'étendent au moins partiellement de façon angulaire par rapport à la direction d'extension de la tige (5.1),
dans lequel la tige (5.1) se compose d'un matériau élastique et présente un entaillage (5.12) s'étendant entre les ailes (5.2), lequel s'étend parallèlement à la direction d'extension (X) de la tige (5.1) à partir de l'extrémité de tige inférieure (5.11) en direction du support de conduite (4) et forme au moins deux tronçons partiels (5.1a, 5.1b) s'étendant côte à côte, **caractérisé en ce que** les ailes (5.2) et l'entaillage (5.12) sont réalisés d'une manière telle, que lorsque l'on enfonce l'élément d'ancrage (5) en direction d'extension (X) dans le revêtement (3), les ailes (5.2) sont pressées ensemble en direction de la tige (5.1) et que l'entaillage (5.12) s'élargit simultanément en direction d'extension (X) vers l'extrémité de tige inférieure (5.11).

2. Dispositif selon la revendication 1, **caractérisé en ce que** l'entaillage (5.12) est au moins partiellement, en particulier complètement, formé par une fente (5.12).

3. Dispositif selon la revendication 2, **caractérisé en ce que** la fente (5.12) commence à l'extrémité de tige inférieure (5.11).

4. Dispositif selon l'une des revendications précédentes, **caractérisé en ce que** les côtés (5.1a1, 5.1b1) se faisant face, des tronçons partiels (5.1a, 5.1b) s'étendant côte à côte, de la tige (5.1) s'étendent parallèlement l'un à l'autre à l'état non sollicité de l'élément d'ancrage (5).

5. Dispositif selon l'une des revendications précédentes, **caractérisé en ce que** l'entaillage (5.12), en particulier la fente (5.12), s'étend jusqu'à un point (5.13) qui se situe, à partir de l'extrémité de tige inférieure (5.11), au-delà d'une zone de liaison (5.3) dans laquelle au moins l'une des ailes (5.2) est reliée au tronçon partiel (5.1a, 5.1b) respectif de la tige (5.1).

6. Dispositif selon l'une des revendications précédentes, **caractérisé en ce que** la section transversale des tronçons partiels (5.1a, 5.1b) de la tige (5.1) diminue en direction d'extension (X) de la tige (5.1), en particulier jusqu'à l'extrémité de tige inférieure (5.11).

7. Dispositif selon l'une des revendications précédentes, **caractérisé en ce que** la section transversale des ailes (5.2) diminue vers la tige (5.1).

8. Dispositif selon l'une des revendications précédentes, **caractérisé en ce que** le support de conduite (4) présente au moins un élément de support (4.3) pour la conduite (2), et en particulier un support de base (4.2) sur la face supérieure (4.21) duquel l'élément de support (4.3) pour la conduite (2) est disposé.

9. Dispositif selon l'une des revendications précédentes, **caractérisé en ce que** les ailes (5.2) se composent d'un matériau élastique.

10. Dispositif selon l'une des revendications précédentes, **caractérisé en ce que** l'élément d'ancrage (5) est réalisé d'une seule pièce, en étant en particulier formé d'une seule pièce avec le support de conduite.

11. Dispositif selon l'une des revendications précédentes, **caractérisé en ce qu'**au moins une saillie (6) en forme de boulon est reliée au support de conduite (4) et s'étend par-delà la face inférieure (4.1) du support de conduite (4) parallèlement à la direction d'extension (X) de la tige (5.1).

12. Dispositif de liaison (7)
- avec un dispositif selon l'une des revendications précédentes,
- avec une conduite (2) et
dans lequel le support (1) est ancré dans le revêtement (3) et fixe la conduite (2) au revêtement (3).

13. Dispositif de liaison (7) selon la revendication 12, **caractérisé en ce que** le support de conduite (4) dépasse au moins partiellement au niveau de la face supérieure (3.1) du revêtement (3) et **en ce que** l'élément d'ancrage (5) dépasse au moins partiellement au niveau de la face inférieure (3.2) du revêtement (3).
